# EUROPEAN PATENT APPLICATION

(11) **EP 4 134 469 A1**
(43) Date of publication of application: **15.02.2023**
(21) Application number: 21812942.7
(22) Date of filing: 18.05.2021
(51) Int. Cl.: C23C 28/00, C23F 11/00

(54) **ZINC-COATED STEEL SHEET**

(30) Priority: 27.05.2020 JP 2020091935
(71) Applicant: JFE Steel Corporation, Tokyo 100-0011 (JP)
(72) Inventor: HASHIZUME, Yukichika, Tokyo 100-0011 (JP); HATA, Kentaro, Tokyo 100-0011 (JP); MATSUDA, Takeshi, Tokyo 100-0011 (JP)
(74) Representative: Haseltine Lake Kempner LLP
(86) International application number: PCT/JP2021/018868
(87) International publication number: WO 2021/241338

(57) **Abstract**

An object of the present invention is, without changing the composition of a base steel sheet, to cover the surface of a galvanized steel sheet with a film that effectively prevents delayed fracture, to thereby provide a galvanized steel sheet having high delayed fracture resistance at low costs.

A galvanized steel sheet is covered with an organic resin containing an anticorrosive additive that reduces galvanic current flowing between the zinc coating and the base steel sheet, to thereby considerably suppress intrusion of hydrogen into the steel sheet to prevent delayed fracture of the steel sheet.

## Description

### Technical Field

The present invention relates to a surface-treated galvanized steel sheet used for automobiles and building materials that is a high-strength surface-treated galvanized steel sheet required to have delayed fracture resistance and having a tensile strength of 1180 MPa (about 120 kgf/mm²) or more.

### Background Art

In recent years, in the field of automobiles, from the viewpoint of environmental protection, there has been a demand for reduction in the weight of bodies of automobiles for reducing the CO₂ emission. In addition, from the viewpoint of protection of occupants, there has also been a demand for improvement in crash safety and there have been attempts to increase the strength of steel sheets for automobiles. However, as the strength of steel materials is increased, a phenomenon called delayed fracture tends to occur, which is known. The delayed fracture is a phenomenon in which a high-strength steel material having been subjected to a static load stress (a load stress less than the tensile strength) for a given period of time undergoes, without plastic deformation, suddenly brittle fracture.

It is known that the delayed fracture is caused by hydrogen having intruded into steel from the environment (hereafter, may be referred to as "hydrogen embrittlement"); the route of intrusion of hydrogen is, for example, the pickling or wet coating step during manufacturing and processing of steel sheets and corrosion in the atmospheric environment. Non Patent Literature 1 has reported that hydrogen-embrittlement susceptibility increases with an increase in the strength of steel materials and becomes considerable in, irrespective of an increase or a decrease in the amounts of alloy elements added, high-strength steel having a tensile strength of 1200 MPa or more. In addition, Non Patent Literature 2 has reported that, in tensile strength 1180 MPa-grade cold-rolled steel sheet high-strength steel sheets, hydrogen cracking occurs.

As members required to have corrosion resistance in the atmospheric environment, galvanized steel sheets are widely used. This is because zinc has a good sacrificial protection action; as a reaction paired with the sacrificial protection reaction, a hydrogen generation reaction occurs on steel substrates and hence, in high-strength galvanized steel sheets, the delayed fracture is a major concern.

In order to prevent, in high-strength steel sheets, such delayed fracture, for example, Patent Literature 1 describes a high-strength steel sheet having high ductility and high delayed fracture resistance and having a maximum tensile strength of 900 MPa or more, and containing, by mass%, C: 0.07 to 0.25%, Si: 0.3 to 2.50%, Mn: 1.5 to 3.0%, Ti: 0.005 to 0.09%, B: 0.0001 to 0.01%, P: 0.001 to 0.03%, S: 0.0001 to 0.01%, Al: 2.5% or less, N: 0.0005 to 0.0100%, and O: 0.0005 to 0.007%, the remainder being iron and incidental impurities, wherein the steel sheet microstructure mainly includes ferrite and includes martensite having a block size of 1 µm or less, the ferrite has a volume fraction of 50% or more, the martensite has a C concentration of 0.3% to 0.9%, and the yield ratio (YR) is 0.75 or less; thus, adjustments of the microstructure and the alloy components have been studied for reducing delayed-fracture susceptibility. However, the method of Patent Literature 1 does not change the amount of hydrogen intruding, from the outer environment, into the steel sheet; thus, the method can hinder the occurrence of delayed fracture, but cannot prevent delayed fracture itself. Furthermore, it causes a concern that the increase in the amounts of alloy components results in degraded weldability.

As methods of preventing intrusion of hydrogen, treatments performed for the surfaces of steel sheets have been studied. For example, Patent Literature 2 describes studies in which, on the surface of a steel material, an undercoat layer formed of a resin composition containing vanadium oxide and/or molybdenum oxide and an overcoat layer formed of a resin composition containing copper oxide are formed for preventing hydrogen embrittlement. However, the technique described in Patent Literature 2 is limited to corrosion in environments in the presence of hydrogen sulfide; thus, corrosion in the atmospheric corrosive environment (which refers to the atmospheric environment in which steel sheets are easily corroded; hereafter, the same definition) has not been studied.

Examples of proposed surface-treatment techniques for preventing intrusion of hydrogen in the atmospheric corrosive environment include techniques of forming a film containing fine particles of a compound containing any one element or two or more elements of Mg, Ti, V, Zr, La, Fe, Si, Mo, and Ni so as to cover the surface of a steel sheet (Patent Literatures 3 to 5), a technique of forming a film formed of a conductive polymer and an anion on the surface of a steel sheet having been subjected to pickling treatment (Patent Literature 6), techniques of forming a film containing one or more metallic acid salts selected from Mo acid salt, W acid salt, Ca salt, and Be salt and a P compound on the surface of a steel sheet (Patent Literatures 7 and 8), and a technique of forming a film containing an anionic compound having a pH buffer action, preferably including an undercoat film containing one or more metals selected from Al, Mg, Ca, Zn, V, and Mo and its overlayer including an organic resin containing or not containing an anionic compound, on the surface of a steel sheet (Patent Literature 9). However, the films formed by these techniques are provided mainly on the surfaces of cold-rolled steel sheets, and it is not known whether the films exert the effect on, in the atmospheric corrosive environment, galvanized steel sheets undergoing further intrusion of hydrogen than cold-rolled steel sheets.

As a surface-treatment technique for preventing, in the atmospheric corrosive environment, intrusion of hydrogen into galvanized steel sheets, for example, formation of a chemical conversion coating containing bismuth on a galvanized high-strength steel sheet for suppressing generation of hydrogen on the surface of the steel sheet has been studied (Patent Literature 10). However, use of bismuth results in very high costs, which is a problem. There is another technique of forming a zinc-nickel-based coated layer in which Ni is added to the coating, on a high-strength steel sheet, for suppressing intrusion of hydrogen (Patent Literature 11). However, this technique is an electroplating treatment of forming the coating and hence it is difficult to apply the technique to hot-dip galvanized steel sheets widely used in the fields of automobiles and building materials.

### Citation List

### Patent Literature

PTL 1: Japanese Unexamined Patent Application Publication No. 2011-111671
PTL 2: Japanese Unexamined Patent Application Publication No. 2-21970
PTL 3: Japanese Unexamined Patent Application Publication No. 2003-41384
PTL 4: Japanese Unexamined Patent Application Publication No. 2016-160507
PTL 5: Japanese Unexamined Patent Application Publication No. 2017-2354
PTL 6: Japanese Unexamined Patent Application Publication No. 2018-44240
PTL 7: Japanese Unexamined Patent Application Publication No. 2018-109216
PTL 8: Japanese Unexamined Patent Application Publication No. 2018-168467
PTL 9: Japanese Unexamined Patent Application Publication No. 2018-188707
PTL 10: Japanese Unexamined Patent Application Publication No. 2015-209585
PTL 11: Japanese Unexamined Patent Application Publication No. 2019-26893

### Non Patent Literature

NPL 1: Shinsaku MATSUYAMA, "Delayed Fracture", THE NIKKAN KOGYO SHIMBUN, LTD. (1989)
NPL 2: Tetsu-to-Hagane, Vol. 95, No. 12 (2009) 887

### Summary of Invention

### Technical Problem

An object of the present invention is, without changing the composition of a base steel sheet, to cover the surface of a galvanized steel sheet with a film that effectively prevents delayed fracture, to thereby provide a galvanized steel sheet having high delayed fracture resistance at low costs.

### Solution to Problem

In order to achieve the above-described object, the inventors of the present invention performed thorough studies and research on the method of performing surface treatment on a galvanized steel sheet to suppress intrusion of hydrogen.

The intrusion of hydrogen into galvanized steel sheets is mainly caused by the hydrogen generation reaction on the steel substrates that is paired with the sacrificial protection action of zinc during corrosion in a wet state. The inventors of the present invention performed research and studies and, as a result, have found the following: during sacrificial protection for a steel substrate by zinc on a galvanized steel sheet, a current flowing between the steel substrate and the zinc (galvanic current) is measured to thereby inferentially quantify the amount of hydrogen intruding into the galvanized steel sheet; in order to suppress intrusion of hydrogen into the galvanized steel sheet, it is important to suppress the galvanic current. The galvanic current correlates with, during sacrificial protection, the dissolution reaction of zinc and the hydrogen-generation reaction rate in the steel-substrate exposed region; thus, the galvanic current is suppressed to thereby inferentially suppress intrusion of hydrogen into the galvanized steel sheet. Thus, they have found that formation of a film containing an anticorrosive additive for suppressing the galvanic current, on the surface of a galvanized steel sheet can effectively suppress intrusion of hydrogen into the galvanized steel sheet.

In order for zinc to perform sacrificial protection for a steel substrate, the galvanic current needs to exceed 0 µA/cm²; however, an excessively high galvanic current results in, during sacrificial protection by zinc for the steel substrate, an increase in the rate of the hydrogen generation reaction occurring in the steel-substrate exposed region and paired with the zinc dissolution reaction. As a result, intrusion of hydrogen into the galvanized steel sheet is accelerated, which results in degradation of delayed fracture resistance.

The inventors of the present invention performed studies on surface-treatment films that can impart high delayed fracture resistance to galvanized steel sheets and, as a result, they have found that a specific organic resin film can be formed so as to contain a specific anticorrosive additive, to thereby provide a galvanized steel sheet having good delayed fracture properties.

In addition, they have found that, as a method of finding the anticorrosive additive and the organic resin film, it is effective to measure the galvanic current in, as simulation of the actual corrosion environment, a test liquid in which an anticorrosive additive is dissolved to the saturation concentration in a 0.5 mass% aqueous NaCl solution.

The present invention has been made on the basis of the above-described findings and the gist thereof is as follows.
[1] A galvanized steel sheet including, on a surface of a galvanized steel sheet having a tensile strength of 1180 MPa or more, an organic resin film containing 30 mass% to 40 mass% of an anticorrosive additive that, in a test solution at 27°C in which the anticorrosive additive is dissolved to a saturation concentration in a 0.5 mass% aqueous NaCl solution, provides a galvanic current of 15 µA/cm² or less.
[2] The galvanized steel sheet according to [1], wherein the test solution at 27°C in which the anticorrosive additive is dissolved to the saturation concentration in the 0.5 mass% aqueous NaCl solution has a pH of 8.5 to 10.5.
[3] The galvanized steel sheet according to [1] or [2], wherein the organic resin film has a film thickness of 0.3 to 4 µm.
[4] The galvanized steel sheet according to any one of [1] to [3], wherein the anticorrosive additive is any one or more passivation-film-forming anticorrosive additives of (a) to (e) below.
   (a) calcium-exchanged silica,
   (b) phosphate-based anticorrosive additives containing any one or more of aluminum, calcium, magnesium, silicon, and zirconium compounds,
   (c) molybdate-based anticorrosive additives containing an aluminum and/or zinc compound,
   (d) tungstate-based anticorrosive additives containing a magnesium compound, and
   (e) silicates containing a calcium and/or zirconium compound.
[5] The galvanized steel sheet according to any one of [1] to [4], wherein the organic resin film is formed of one or more selected from epoxy resin, acrylic resin, urethane resin, ethylene resin, phenol resin, and polyester resin. Advantageous Effects of Invention

A steel sheet according to the present invention has high delayed fracture resistance in which delayed fracture is effectively suppressed. Thus, such high-strength members can be used for automobiles and building materials, which enables reduction in the weight. In addition, compared with the related art, without requiring change in the compositions of base steel sheets and without requiring use of expensive raw materials such as bismuth, steel sheets having good delayed fracture properties are provided at low costs, which is advantageous.

### Brief Description of Drawings

[Fig. 1] Fig. 1 is a schematic view of a test specimen for measuring the current flowing between a steel substrate and zinc.
[Fig. 2] Fig. 2 is a schematic view of a device for measuring the current flowing between a steel substrate and zinc.
[Fig. 3] Fig. 3 is a schematic view of a test specimen for evaluating delayed fracture resistance.

### Description of Embodiments

A steel sheet serving as a base material (substrate) of a galvanized steel sheet having high delayed fracture resistance according to the present invention is a high-strength steel sheet having a tensile strength of 1180 MPa or more, more preferably a high-strength steel sheet having a tensile strength of 1480 MPa or more. Steel sheets having low tensile strengths are inherently less likely to undergo delayed fracture. Advantages of the present invention are provided even in steel sheets having low tensile strengths, but are markedly provided in steel sheets having tensile strengths of 1180 MPa or more, and are more markedly provided in steel sheets having tensile strengths of 1480 MPa or more. They are not particularly limited in terms of chemical composition or steel microstructure. However, of these, preferred are high-strength steel sheets having tensile strengths of 1180 MPa or more and used in, for example, the field of automobiles or the field of building materials, particularly often used in, for example, the field of automobiles, and more preferred are high-strength steel sheets having tensile strengths of 1480 MPa or more.

As long as a high-strength steel sheet preferably used in the present invention has a desired tensile strength, it may have any composition and microstructure. A high-strength steel sheet preferably used in the present invention may be subjected to, for the purpose of improving various properties such as mechanical properties, for example, one or a combination of a plurality of microstructural or structural modifications such as solid solution strengthening by addition of an interstitial solid solution element such as C or N and a substitutional solid solution element such as Si, Mn, P, or Cr, precipitation strengthening using carbide, nitride or carbonitride of Ti, Nb, V, Al, or the like, chemical composition modification such as addition of a strengthening element such as W, Zr, B, Cu, or a rare-earth element, strengthening by recovery annealing at a temperature that does not cause recrystallization or partial recrystallization strengthening of not causing complete recrystallization and leaving an unrecrystallized region, strengthening using a transformation microstructure such as formation of a bainite or martensite single phase or formation of a composite microstructure of ferrite and such a transformation microstructure, strengthening by grain refinement represented by, with a ferrite grain diameter defined as d, Hall-Petch equation: σ = σ₀ + kd^{-1/2} (where σ: stress, σ₀, k: constant of material), and work strengthening such as rolling.

The composition of such a high-strength steel sheet is, for example, C: 0.1 to 0.4 mass%, Si: 0 to 2.5 mass%, Mn: 1 to 3 mass%, P: 0 to 0.05 mass%, S: 0 to 0.005 mass%, the remainder being Fe and incidental impurities, and further optionally added one or two or more of Cu: 1.0 mass% or less, Ti: 0.080 mass% or less, V: 0.5 mass% or less, Al: 0.1 mass% or less, Cr: 1.0 mass% or less, Nb: 0.2 mass% or less, W: 0.5 mass% or less, Zr: 0.1 mass% or less, B: 0.005 mass% or less, and the like. In general, such optionally added elements are preferably added in a total amount of about 4 mass% or less.

Non-limiting examples of commercially available high-strength steel sheets include JFE-CA1180, JFE-CA1370, JFE-CA1470, JFE-CA1180SF, JFE-CA1180Y1, JFE-CA1180Y2 (all are manufactured by JFE Steel Corporation) and SAFC1180D (manufactured by NIPPON STEEL CORPORATION).

The sheet thickness of the high-strength steel sheet is also not particularly limited, but is ordinarily about 0.8 to about 2.5 mm, more preferably suitably about 1.2 to about 2.0 mm.

The zinc coating covering the high-strength steel sheet (base steel sheet) may be formed by any coating process such as hot-dip galvanization, electroplating, electroless plating, or vapor-deposition plating, but is industrially ordinarily hot-dip galvanization (hot-dip galvanized steel sheet) or electrogalvanization (electrogalvanized steel sheet), for example. Hot-dip galvanized steel sheets include hot-dip galvannealed steel sheets obtained by hot-dip galvanization followed by alloying treatment.

As described above, the intrusion of hydrogen into galvanized steel sheets is mainly caused by the hydrogen generation reaction on the steel substrates that is paired with the sacrificial protection action of zinc during corrosion in a wet state. During sacrificial protection for a steel substrate by zinc on a galvanized steel sheet, a current flowing between the steel substrate and the zinc (galvanic current) is measured to thereby inferentially quantify the amount of hydrogen intruding into the galvanized steel sheet; in order to suppress intrusion of hydrogen into the galvanized steel sheet, it is important to suppress the galvanic current.

The galvanic current correlates with, during sacrificial protection, the dissolution reaction of zinc and the hydrogen-generation reaction rate in the steel-substrate exposed region; thus, the galvanic current is suppressed to thereby inferentially suppress intrusion of hydrogen into the galvanized steel sheet. Thus, formation of a film containing an anticorrosive additive for suppressing the galvanic current on the surface of a galvanized steel sheet can inferentially suppress intrusion of hydrogen into the galvanized steel sheet.

There are a wide variety of anticorrosive additives practically used in the field of metallic products and no method of selecting an anticorrosive additive for suppressing galvanic current is well-known. The inventor of the present invention performed studies on the method and, as a result, has conceived the following method.

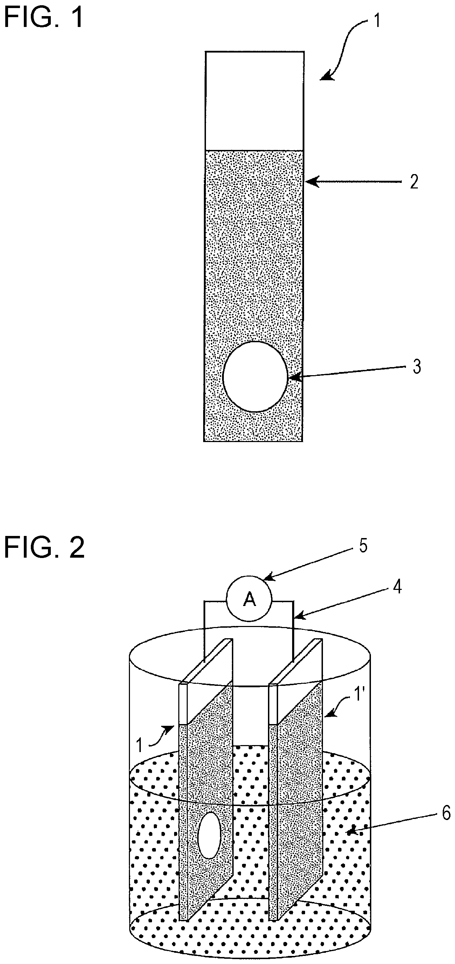

As illustrated in Fig. 1, for the galvanized steel sheet, for example, a sealing material 2 was used to cover specimen surfaces and the end surface and a circular measurement region 3 having a diameter of 24 mm was formed on a specimen surface to prepare a test specimen 1. As with the test specimen 1, for a base steel sheet prepared by removing, from a galvanized steel sheet, the zinc coating using 5 mass% hydrochloric acid, for example, a sealing material 2 was used to cover specimen surfaces and the end surface and a circular measurement region 3 having a diameter of 24 mm was formed on a specimen surface to prepare a test specimen 1'.

The anticorrosive additive that suppresses the galvanic current is as follows: as illustrated in Fig. 2, the test specimen 1 and the test specimen 1' are electrically connected via a zero-shunt ammeter 5 using, for example, a copper wire 4; in a test solution at 27°C in which an anticorrosive additive is dissolved to saturation in a 0.5 mass% aqueous NaCl solution, the measurement region of the test specimen 1 and the measurement region of the test specimen 1' are immersed so as to face each other with a gap width of 10 mm therebetween, and the current flowing at this time is measured using the zero-shunt ammeter; when the value becomes sufficiently stable, this value is 15 µA/cm² or less in the case of the target anticorrosive additive. Note that, in Fig. 2, the test specimen 1, in which zinc in the surface of the galvanized steel sheet has higher ionization tendency than iron in the surface of the base steel sheet of the test specimen 1' and zinc precedently leaches into the test solution to release electrons, serves as the negative electrode of the battery relating to the galvanic current; on the other hand, the test specimen 1' receives the electrons and hence serves as the positive electrode of the battery.

Note that the aqueous solution for measuring the galvanic current is prepared to have a salt concentration of 0.5 mass% from the viewpoint that sodium chloride sufficiently functions as the supporting electrolyte and the experimental costs are reduced.

The reason why the concentration of the anticorrosive additive dissolved in the 0.5 mass% aqueous NaCl solution is set to the saturation concentration is as follows: in the case of corrosion in the actual environment, the liquid film in which the corrosive reaction occurs is very small, and hence, in the liquid film, substances move very fast and the component leaching from the anticorrosive additive immediately reaches its saturation concentration inferentially.

When the galvanic current is, in a stable state, 15 µA/cm² or less, the amount of hydrogen generated in the corrosive reaction decreases; with this, the amount of hydrogen intruding into steel decreases, so that high delayed fracture resistance is inferentially provided.

The reason why the temperature of the test solution in which the anticorrosive additive is dissolved to saturation in the 0.5 mass% aqueous NaCl solution is set to 27°C is as follows: in general, as ordinary temperature, 27°C is often employed and the galvanic current is easily evaluated.

In the test solution in which the anticorrosive additive is dissolved to saturation, the coupling current ordinarily has a positive correlation with the temperature of the test solution; in an Example of the present invention in which a hot-dip galvannealed steel sheet was used with a resin containing, in A1: epoxy resin, 30 mass% of aluminum dihydrogen tripolyphosphate, the coupling current was found to be, in the case of the test solution at a temperature of 27°C, 8 µA/cm², in the case of 10°C, 2 µA/cm², and, in the case of 30°C, 12 µA/cm².

Examples of the anticorrosive additive having such characteristics include passivation-film-forming anticorrosive additives such as calcium-exchanged silica, phosphate-based anticorrosive additives containing one or more of aluminum, calcium, magnesium, silicon, and zirconium compounds, molybdate-based anticorrosive additives containing an aluminum and/or zinc compound, tungstate-based anticorrosive additives containing a magnesium compound, and silicates containing a calcium and/or zirconium compound.

Note that the phosphate-based anticorrosive additives are preferably phosphite, orthophosphate, and polyphosphate. For such an anticorrosive additive, its component contained leaches out, in the case of an aqueous solution environment, into the aqueous solution or, in the case of an atmospheric corrosive environment, into a liquid film in a wet state, to form, on the steel-substrate exposed region, a strong passivation film to thereby suppress the dissolution reaction of zinc and the hydrogen generation reaction, to suppress the galvanic current inferentially. In addition, such an anticorrosive additive having leached out keeps the pH of the aqueous solution in a weakly alkaline range (pH: 8.5 to 10.5) in which zinc is less likely to leach out, to thereby suppress the dissolution reaction of zinc to suppress the galvanic current inferentially.

The film of the steel sheet can be adjusted by dispersing the above-described anticorrosive additive in a film chemical conversion agent containing an organic resin component.

The reason why, as the film, a film containing an organic resin is employed is as follows: the organic resin provides a barrier layer against the corrosive factor to suppress corrosion and also has the function of preventing separation of the coating layer upon being worked.

The organic resin suitably employed is one or more selected from epoxy resin, acrylic resin, urethane resin, ethylene resin, phenol resin, and polyester resin. This is because the effect of suppressing corrosion is more strongly provided and the effect of preventing separation of the coating layer upon being worked is more strongly provided.

For the film of the steel sheet, two or more organic resins may be appropriately selected from the above-described organic resins and a plurality of layers may be formed such that the organic resins are individually contained in the layers.

In order that the film in a corrosive environment exerts the effect of suppressing occurrence of delayed fracture, the film needs to have an anticorrosive additive content (the ratio of the mass of the anticorrosive additive to the total mass of the film) of 30 mass% or more.

On the other hand, with an increase in the anticorrosive additive content, the region where the passivation film is formed also inferentially increases; however, with the increase in the passivation film, the anode area decreases, so that local corrosion tends to proceed; when the anticorrosive additive content exceeds 40 mass%, a large amount of hydrogen tends to be generated in specific areas and the effect of generating delayed fracture resistance is not provided. Thus, the anticorrosive additive content is set to 40 mass% or less.

As described above, in a corrosive environment, in order to exert the effect of suppressing occurrence of delayed fracture in a high-strength galvanized steel sheet, the content of the specific anticorrosive additive in the film needs to be within the greatly limited range of 30 mass% or more and 40 mass% or less. This is novel findings that have been firstly disclosed by the present invention. In addition, even when the present invention is applied to cold-rolled steel sheets, the effect of suppressing occurrence of delayed fracture exerted for galvanized steel sheets is not provided and the present invention is a technique specifically applicable to galvanized steel sheets.

Furthermore, also from the viewpoint of post-coating adhesiveness and corrosion resistance, the anticorrosive additive content is set to 40 mass% or less. For the film thickness of the film, an excessively thin film may insufficiently function as a barrier layer for shielding the steel sheet from the corrosive environment; thus, the film preferably has a film thickness of 0.3 µm or more. The film more preferably has a film thickness of 0.4 µm or more, still more preferably 0.5 µm or more. On the other hand, in applications such as automobiles, there is a step in which steel sheets are processed into predetermined shapes by press working and then the steel sheets are combined together by spot welding. At this time, in the case of an excessively thick film, the current does not flow during welding, which may result in welding failure; thus, in the case of using spot welding for bonding together steel sheets, the films preferably have a film thickness of 4 µm or less. Such a film more preferably has a film thickness of 3 µm or less, still more preferably 2 µm or less.

The method of measuring, in the film, the anticorrosive additive content may be, for example, an X-ray fluorescence analysis. Specifically, the surface of the film is irradiated with X rays, the intensity of fluorescent X-rays of an element contained in the anticorrosive additive is measured and compared with the calibration curve to thereby achieve the calculation.

For the thickness of the film, a cross section of the film is observed and, in a random field of view, at a plurality of points (for example, three points), the thicknesses of the film (x) (thickness from the surface of the galvanized steel sheet serving as the base material to the surface of the film (x)) are measured and the average value thereof is determined as the film thickness. The processing method of forming the cross section is not particularly limited, but may be, for example, FIB (Focused Ion Beam) processing.

The film of the present invention can be obtained by directly forming the film on the surface of a steel sheet. In the existing resin-film steel sheet, a steel sheet is often subjected to surface conditioning, to zinc phosphate treatment, and then to formation of a resin film. This is because the zinc phosphate treatment is performed for improving corrosion resistance; however, the resin film according to the present invention alone can ensure sufficiently corrosion resistance and hence the zinc phosphate treatment resulting in an increase in the costs is preferably not performed.

In the present invention, the film formed on the galvanized steel sheet, as described above, contains an organic resin and a specific anticorrosive additive. In this case, the anticorrosive additive may be contained in the form of being dissolved in the film or may be contained in the form of particles. When the anticorrosive additive is contained in the film in the form of particles, their particle diameters (maximum particle diameter) are not particularly limited.

Note that, in the present invention, the film preferably does not contain, other than the anticorrosive additive, particulate components having a maximum particle diameter equal to or larger than the film thickness of the film. In the existing resin-covered steel sheet, for example, for the purpose of increasing the conductivity of the film to improve weldability, conductive particles are added to the film in some cases. Alternatively, in order to improve press workability, for example, a solid lubricant is added; thus, for various purposes, particulate components are added in some cases.

However, when such a particulate component other than the anticorrosive additive is added to the film, the interface between such a particle and the film (organic resin) becomes the starting point of corrosion, and advantages of the present invention (improvement in delayed fracture resistance) may be hindered; in particular, when the particulate component has particle diameters larger than the film thickness of the film, defects tend to be formed and may become the starting points of corrosion. Thus, in the film, other than the anticorrosive additive, a particulate component having a maximum particle diameter equal to or larger than the film thickness of the film is preferably not contained. Examples of the particulate component include conductive particles and solid lubricant particles. Examples of the conductive particles include ceramic particles, iron alloy particles, and stainless steel particles. Examples of the solid lubricant particles include inorganic solid lubricant particles of molybdenum disulfide, graphite, or boron nitride.

Note that the lower limit of the film thickness of the film is preferably 0.3 µm and hence, as long as the maximum particle diameter of the particulate component that can be contained is set to less than 0.3 µm or preferably 0.2 µm or less, the conditions are satisfied irrespective of the film thickness of the film. The maximum particle diameter of the particulate component that can be contained is more preferably 0.15 µm or less.

The maximum particle diameter of the particulate component used herein is as follows: the film is dissolved using an organic solvent in which the film can be dissolved such as toluene or acetone; subsequently, the particulate component is collected using a filter formed of, for example, polytetrafluoroethylene, cleaned, and dispersed in an electrolyte solvent; subsequently, the Coulter method is used to measure volume equivalent spherical diameters and, in the resultant particle diameter distribution, the maximum value is the maximum particle diameter of the particulate component. Note that, when the film contains a plurality of particulate components, the collected particulate components may be dispersed in the electrolyte solvent, and subsequently subjected to a centrifugation process such that the particulate components are separated from each other; subsequently, for each of the particulate components, the Coulter method may be used to measure the volume equivalent spherical diameter. When the particulate component is a commercially available product, the maximum particle diameter of the particulate component described in the catalog may be employed as the maximum particle diameter of the particulate component. The maximum particle diameter used herein means the maximum particle diameter of primary particles.

As have been described so far, an organic resin and a specific anticorrosive additive are contained and, other than the anticorrosive additive, the above-described particulate components having large particle diameters are not contained, so that particles that cause coating-film defects other than the anticorrosive additive are not present in the film, there is no concern that near-particle regions become starting points of corrosion, and delayed fracture resistance can be ensured inferentially.

From such viewpoints, the film preferably does not contain conductive particles or solid lubricant particles; the film more preferably does not contain particulate components other than the anticorrosive additive; the film is still more preferably composed only of the organic resin and the anticorrosive additive.

### EXAMPLES

Galvanized steel sheets serving as base materials employed were hot-dip galvannealed steel sheets (in Table 2, referred to as GA) having a tensile strength of 1480 MPa and a sheet thickness of 1.6 mm in which the base steel sheet had a chemical composition of C: 0.18 mass%, Si: 1.0 mass%, Mn: 3.0 mass%, P: 0.007 mass%, S: 0.0005 mass%, the remainder being Fe and incidental impurities. They had a coating weight of 44 g/m² per one side and were both-side coated steel sheets. The zinc coating films had an Fe content of 14 mass%. The hot-dip galvannealed steel sheets were immersed in toluene and subjected to ultrasonic cleaning for 5 minutes for removing the anticorrosive oil to prepare samples. In addition, as a Comparative Example, a cold-rolled steel sheet before being subjected to hot-dip galvanization (in Table 2, referred to as CR) was used. "Galvanic current measurement"

Such a sample was sheared so as to have a width of 30 mm and a length of 100 mm to prepare test specimens. For some of the test specimens, the zinc coatings were removed using hydrochloric acid having a concentration of 5 mass% to prepare base-steel-sheet test specimens for measuring the galvanic current. For such a galvanized steel sheet serving as a test specimen 1, as illustrated in Fig. 1, a circular measurement region having a diameter of 24 mm was exposed while the regions other than the measurement region were insulated using a tape sealing material. On the other hand, also for such a base steel sheet serving as a test specimen 1', as with the test specimen 1 illustrated in Fig. 1, a circular measurement region having a diameter of 24 mm was exposed while the regions other than the measurement region were insulated using a tape sealing material. These test specimen 1 and test specimen 1' were electrically connected using a copper wire 4 via a zero-shunt ammeter 5 to form a galvanic couple, immersed in an aqueous NaCl solution having a concentration of 0.5 mass% at 27°C in which an anticorrosive additive below was dissolved to saturation such that the measurement region of the test specimen 1 and the measurement region of the test specimen 1' face each other with a gap width of 10 mm therebetween, and left for 72 hours during which, at the time when the current was sufficiently stable, the galvanic current was evaluated. The result and the measurement result of pH of the aqueous solution will be described in Table 1.

### ·Anticorrosive additive

Zinc orthophosphate (ZMP manufactured by Heubach GmbH)
Strontium phosphate (SRPP manufactured by Heubach GmbH)
Calcium-exchanged silica (SHIELDEX-C303 manufactured by W. R. Grace & Co.)
Aluminum dihydrogen tripolyphosphate (K-WHITE G750 manufactured by Tayca Corporation)
Magnesium phosphate (MP-620 manufactured by KIKUCHI COLOR & CHEMICALS CORPORATION)
Calcium phosphite (CP-1300 manufactured by KIKUCHI COLOR & CHEMICALS CORPORATION)
Calcium zirconium silicate (ZR-CS manufactured by KIKUCHI COLOR & CHEMICALS CORPORATION)

As organic resins for resin films, A1 to A4 below were used; a treatment liquid containing any one of the organic resins and a predetermined anticorrosive additive (in some of Comparative Examples, treatment liquids containing an organic resin alone) was applied to the surface of a steel sheet by any one of coating process (bar coating), spraying process, and immersion process (and roller-squeezing), and subsequently heated to a target sheet temperature of 140°C using an induction heater to thereby form a resin film.

A1: epoxy resin (manufactured by Japan Epoxy Resins Co., Ltd., trade name: jER1009)
A2: acrylic resin (manufactured by DIC Corporation, trade name: 40-418EF)
A3: urethane resin (manufactured by Dai Nippon Toryo Company, Limited, trade name: V Top RC Clear)
A4: fluororesin (manufactured by Asahi Glass Co., Ltd., trade name: LUMIFLON (registered trademark) LF552)

The anticorrosive additives were added to and mixed with the organic resins and used to form films on the hot-dip galvannealed steel sheets and the cold-rolled steel sheets to prepare samples. For the samples, the types of the organic resins, film thicknesses, and content ratios of the anticorrosive additives are described in Table 2. In Table 2, the high-strength galvanized steel sheets having films in Inventive Examples and Comparative Examples were evaluated in the following manner in terms of delayed fracture resistance and post-coating corrosion resistance. The results together with the production conditions will be described in Table 2.

Note that, in the measurement of the film thickness of such a resin film, a cross section obtained by FIB processing was observed with an SEM; in a random field of view, at three points, the thicknesses of the resin film (thicknesses from the surface of the base-material steel sheet to the surface of the resin film) were measured and the average value thereof was determined as the film thickness.

### (1) Evaluation of delayed fracture resistance

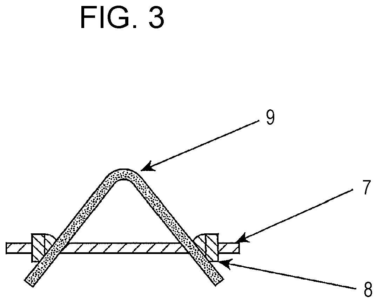

Each of the steel sheets of Inventive Examples and Comparative Examples was sheared so as to have a width of 35 mm and a length of 100 mm and subsequently, in order to remove the residual stress during shearing, subjected to grinding processing so as to have a width of 30 mm, to prepare a test specimen. This test specimen was subjected to 90° bending processing using a 3-point bending test machine; as illustrated in Fig. 3, this bent test specimen 9 was restrained such that the inside spacing became 7 mm using a bolt 7 and nuts 8 to fix the shape of the test specimen, to prepare the test specimen for delayed-fracture-resistance evaluation. The test specimen for delayed-fracture-resistance evaluation prepared in this manner was subjected to a combined cyclic corrosion test defined in SAE J2334 set by SAE International and constituted by dry, humid, and salt-water immersion stages, for 40 cycles at the maximum. Before the salt-water immersion stage of each cycle, whether or not cracking occurred was visually inspected and the cycle at which cracking occurred was determined. This test was performed for three samples per steel sheet, and the average value thereof was used for evaluation. The evaluation was performed on the basis of the number of cycles in accordance with grades below. Note that, in Table 2, the number of cycles upon cracking of more than 40 means that no cracking occurred in the results of the Examples. Good and Excellent are pass grades.

In the present invention, galvanized steel sheets evaluated as Good or Excellent in accordance with the following evaluation grades are determined as galvanized steel sheets having high delayed fracture resistance.
Excellent: more than 40 cycles
Good: 30 cycles or more and 40 cycles or less
Average: 10 cycles or more and less than 30 cycles
Poor: less than 10 cycles

### (2) Evaluation of post-coating corrosion resistance

In Inventive Examples and Comparative Examples, a steel sheet was sheared to 150 mm × 70 mm to provide a flat-plate test specimen serving as a test specimen for a corrosion resistance test. This test specimen for a corrosion resistance test was subjected to chemical conversion of immersion using "PALBOND" (registered trademark) manufactured by Nihon Parkerizing Co., Ltd. under standard conditions (35°C, 120 seconds), and subsequently to electrodeposition coating using an electrodeposition coating material "GT-100" manufactured by Kansai Paint Co., Ltd. and baking treatment. In the electrodeposition coating, the thickness of the coating film was set to 15 µm, and a commercially available electromagnetic film thickness meter was used to measure the film thickness. In the post-coating test specimen, a box cutter was used to form an X cut (crossing angle: 60° to 90°) reaching the substrate; the salt spray testing defined in JISZ 2371 was performed for 840 hours; in the cross-cut in the post-test test specimen, the maximum rust width was measured to evaluate corrosion resistance.

For corrosion resistance, relative to the untreated steel sheet having the maximum rust width defined as 1, the maximum rust width (A) of each test specimen was calculated and evaluated as follows. Good and Excellent are pass grades.
Excellent: A ≤ 0.8
Good: 0.8 < A ≤ 0.95
Average: 0.95 < A ≤ 1.2
Poor: 1.2 < A

In Table 1, No. 1 describes, in the case where a galvanic couple is immersed in a 0.5 mass% aqueous NaCl solution in which anticorrosive additives are not dissolved, the current flowing through the galvanic couple. On the other hand, Nos. 2 to 8 describe, in the cases where a galvanic couple is immersed in a 0.5 mass% aqueous NaCl solution in which an anticorrosive additive is dissolved to saturation, the current flowing through the galvanic couple. In any of these, the galvanic current is suppressed, compared with No. 1; anticorrosive additives having a pH of more than 8.5 in the aqueous solution (Nos. 4 to 8) suppress the galvanic current, compared with anticorrosive additives having a pH of less than 8.5 in the aqueous solution (Nos. 2 and 3), which has been demonstrated.

In Table 2, No. 1 steel sheet, which is a Comparative Example in which no resin film is formed on the hot-dip galvanized steel sheet, undergoes delayed fracture early, which has demonstrated low delayed fracture resistance.

No. 2 steel sheet, which is a Comparative Example in which a cold-rolled steel sheet is covered with an organic resin containing an anticorrosive additive according to the present invention, does not have sufficient delayed fracture resistance.

No. 3 to No. 25 steel sheets are examples in which treatment liquids prepared by mixing together an anticorrosive additive that suppressed the galvanic current in Table 1 and the epoxy resin (A1) were applied, by coating process (bar coating), to the surfaces of hot-dip galvanized steel sheets, to form resin films. No. 3 steel sheet is an example in which a treatment liquid of the epoxy resin (A1) to which no anticorrosive additive is added is similarly applied to form a resin film. Of these, Nos. 8 to 12, Nos. 14 to 15, and Nos. 18 to 23 steel sheets in which the content of the anticorrosive additive suppressing the galvanic current is within the range of the present invention each have high delayed fracture resistance and also high post-coating corrosion resistance.

By contrast, No. 3 steel sheet in which no anticorrosive additive is added and Nos. 4 to 6 steel sheets in which the content of the anticorrosive additive is lower than the range of the present invention have slightly improved delayed fracture resistance compared with No. 1 steel sheet in which no resin film is formed, but have lower delayed fracture resistance than No. 8 to No. 12 steel sheets serving as Inventive Examples. No. 7 steel sheet in which the content of the anticorrosive additive is higher than the range of the present invention also has slightly improved delayed fracture resistance compared with No. 1 steel sheet in which no resin film is formed, but also has lower delayed fracture resistance than No. 8 to No. 12 steel sheets serving as Inventive Examples. This is inferentially because the increase in the passivation film results in a decrease in the anode area, so that local corrosion tends to proceed and hydrogen tends to be generated in specific areas. Furthermore, No. 24 and No. 25 steel sheets containing an anticorrosive additive, as described in Table 1, having a pH of lower than 8.5 and causing a galvanic current higher than the range of the present invention also have lower delayed fracture resistance than No. 8 to No. 12 steel sheets serving as Inventive Examples.

No. 26 and No. 27 steel sheets, which are Inventive Examples in which the method of forming the resin film is changed from that in No. 8 steel sheet, both have high delayed fracture resistance and also high post-coating corrosion resistance.

No. 28 to No. 31 steel sheets, which are Inventive Examples in which the type of the organic resin is changed, each have high delayed fracture resistance and also high post-coating corrosion resistance.

**[Table 1]**

| Bath No | Anticorrosive additive | Galvanic current (µA/cm²) | pH | Remarks |
|---|---|---|---|---|
| 1 | - | 23 | 6.5 | Comparative Example |
| 2 | Zinc orthophosphate | 18 | 6 | Comparative Example |
| 3 | Strontium phosphate | 19 | 5.5 | Comparative Example |
| 4 | Calcium-exchanged silica | 5 | 10 | Inventive Example |
| 5 | Aluminum dihydrogen tripolyphosphate | 8 | 9.5 | Inventive Example |
| 6 | Magnesium phosphate | 1 | 8.5 | Inventive Example |
| 7 | Calcium phosphite | 3 | 10.5 | Inventive Example |
| 8 | Calcium zirconium silicate | 13 | 10 | Inventive Example |

**[Table 2]**

| No. | Base material | Resin film | | | | | Performance | | | Remarks |
|---|---|---|---|---|---|---|---|---|---|---|
| | | Anticorrosive additive | | Type of resin *1 | Film thickness (µm) | Film formation method | Post-coating corrosion resistance | Delayed fracture resistance | | |
| | | Type | Content (mass%) | | | | | Number of cycles at occurrence of cracking | Evaluation | |
| 1 | GA | - | - | - | - | - | Average | 2 | Poor | Comparative Example |
| 2 | CR | Aluminum dihydrogen tripolyphosphate | 30 | A1 | 1.0 | Bar coating | Good | 21 | Average | Comparative Example |
| 3 | GA | - | - | A1 | 1.0 | Bar coating | Good | 11 | Average | Comparative Example |
| 4 | GA | Aluminum dihydrogen tripolyphosphate | 1 | A1 | 1.0 | Bar coating | Good | 13 | Average | Comparative Example |
| 5 | GA | Aluminum dihydrogen tripolyphosphate | 3 | A1 | 1.0 | Bar coating | Good | 21 | Average | Comparative Example |
| 6 | GA | Aluminum dihydrogen tripolyphosphate | 25 | A1 | 1.0 | Bar coating | Good | 25 | Average | Comparative Example |
| 7 | GA | Aluminum dihydrogen tripolyphosphate | 45 | A1 | 1.0 | Bar coating | Average | 27 | Average | Comparative Example |
| 8 | GA | Aluminum dihydrogen tripolyphosphate | 30 | A1 | 1.0 | Bar coating | Excellent | >40 | Excellent | Inventive Example |
| 9 | GA | Aluminum dihydrogen tripolyphosphate | 40 | A1 | 1.0 | Bar coating | Good | >40 | Excellent | Inventive Example |
| 10 | GA | Aluminum dihydrogen tripolyphosphate | 30 | A1 | 0.3 | Bar coating | Good | 30 | Good | Inventive Example |
| 11 | GA | Aluminum dihydrogen tripolyphosphate | 30 | A1 | 2.0 | Bar coating | Excellent | >40 | Excellent | Inventive Example |
| 12 | GA | Aluminum dihydrogen tripolyphosphate | 30 | A1 | 4,0 | Bar coating | Excellent | >40 | Excellent | Inventive Example |
| 13 | GA | Aluminum dihydrogen tripolyphosphate | 30 | A1 | 5.0 | Bar coating | Excellent | >40 | Excellent | Inventive Example |
| 14 | GA | Calcium-exchanged silica | 30 | A1 | 1.0 | Bar coating | Excellent | 39 | Good | Inventive Example |
| 15 | GA | Calcium-exchanged silica | 40 | A1 | 1.0 | Bar coating | Excellent | >40 | Excellent | Inventive Example |
| 16 | GA | Calcium-exchanged silica | 25 | A1 | 1.0 | Bar coating | Good | 24 | Average | Comparative Example |
| 17 | GA | Calcium-exchanged silica | 45 | A1 | 1.0 | Bar coating | Average | 26 | Average | Comparative Example |
| 18 | GA | Magnesium phosphate | 30 | A1 | 1.0 | Bar coating | Excellent | >40 | Excellent | Inventive Example |
| 19 | GA | Magnesium phosphate | 40 | A1 | 1.0 | Bar coating | Excellent | >40 | Excellent | Inventive Example |
| 20 | GA | Calcium phosphate | 30 | A1 | 1.0 | Bar coating | Good | 33 | Good | Inventive Example |
| 21 | GA | Calcium phosphate | 40 | A1 | 1.0 | Bar coating | Good | 35 | Good | Inventive Example |
| 22 | GA | Calcium zirconium silicate | 30 | A1 | 1.0 | Bar coating | Good | 33 | Good | Inventive Example |
| 23 | GA | Calcium zirconium silicate | 40 | A1 | 1.0 | Bar coating | Good | 34 | Good | Inventive Example |
| 24 | GA | Zinc orthophosphate | 30 | A1 | 1.0 | Bar coating | Good | 24 | Average | Comparative Example |
| 25 | GA | Strontium phosphate | 30 | A1 | 1.0 | Bar coating | Good | 21 | Average | Comparative Example |
| 26 | GA | Aluminum dihydrogen tripolyphosphate | 30 | A1 | 1.0 | Spraying | Excellent | 39 | Good | Inventive Example |
| 27 | GA | Aluminum dihydrogen tripolyphosphate | 30 | A1 | 1.0 | Immersion +roller | Good | >40 | Good | Inventive Example |
| 28 | GA | Aluminum dihydrogen tripolyphosphate | 30 | A2 | 1.0 | Bar coating | Excellent | 37 | Good | Inventive Example |
| 29 | GA | Aluminum dihydrogen tripolyphosphate | 30 | A2 | 2.0 | Bar coating | Excellent | >40 | Excellent | Inventive Example |
| 30 | GA | Aluminum dihydrogen tripolyphosphate | 30 | A3 | 1.0 | Bar coating | Excellent | 39 | Good | Inventive Example |
| 31 | GA | Aluminum dihydrogen tripolyphosphate | 30 | A4 | 1.0 | Bar coating | Good | 36 | Good | Inventive Example |

| | | | | | | | | | | |
|---|---|---|---|---|---|---|---|---|---|---|
| *1 Organic resins A1 to A4 described in Description | | | | | | | | | | |

### Reference Signs List

- 1: test specimen of galvanized steel sheet
- 1': test specimen of base steel sheet prepared by removing zinc coating from galvanized steel sheet using hydrochloric acid
- 2: sealing material
- 3: non-sealing-material region (measurement region)
- 4: copper wire
- 5: zero-shunt ammeter
- 6: 0.5 mass% aqueous NaCl solution in which anticorrosive additive is dissolved at saturation concentration
- 7: bolt
- 8: nut
- 9: bent test specimen

## Claims

1. A galvanized steel sheet comprising, on a surface of a galvanized steel sheet having a tensile strength of 1180 MPa or more, an organic resin film containing 30 mass% to 40 mass% of an anticorrosive additive that, in a test solution at 27°C in which the anticorrosive additive is dissolved to a saturation concentration in a 0.5 mass% aqueous NaCl solution, provides a galvanic current of 15 µA/cm² or less.

2. The galvanized steel sheet according to Claim 1, wherein the test solution at 27°C in which the anticorrosive additive is dissolved to the saturation concentration in the 0.5 mass% aqueous NaCl solution has a pH of 8.5 to 10.5.

3. The galvanized steel sheet according to Claim 1 or 2, wherein the organic resin film has a film thickness of 0.3 to 4 µm.

4. The galvanized steel sheet according to any one of Claims 1 to 3, wherein the anticorrosive additive is any one or more passivation-film-forming anticorrosive additives of (a) to (e) below:
(a) calcium-exchanged silica,
(b) phosphate-based anticorrosive additives containing any one or more of aluminum, calcium, magnesium, silicon, and zirconium compounds,
(c) molybdate-based anticorrosive additives containing an aluminum and/or zinc compound,
(d) tungstate-based anticorrosive additives containing a magnesium compound, and
(e) silicates containing a calcium and/or zirconium compound.

5. The galvanized steel sheet according to any one of Claims 1 to 4, wherein the organic resin film is formed of one or more selected from epoxy resin, acrylic resin, urethane resin, ethylene resin, phenol resin, and polyester resin.
